# EUROPEAN PATENT APPLICATION

(11) **EP 1 777 959 A1**
(43) Date of publication of application: **25.04.2007**
(21) Application number: 05292213.5
(22) Date of filing: 20.10.2005
(51) Int. Cl.: H04N 7/18

(54) **System and method for capturing audio/video material**

(71) Applicant: FRANCE TELECOM, 75015 Paris (FR)
(72) Inventor: Watlington, John, Acton, MA 01720 (US)
(74) Representative: DeVile, Jonathan Mark

(57) **Abstract**

A system for capturing audio and/or video content from one or more client devices includes a media storage device operable to receive audio/video material from at least one of the client devices and to record the audio/video material continuously and to discard the recorded audio/video material after a predetermined retention period. The system also includes a user interface device and a content analyser. The content analyser is operable to sample the audio/video material within the recording period with respect to one or more parameters of the audio/video material and to retrieve parts of the audio/video material from the media storage device which have selected sampled parameter values of interest. The content analyser is operable to provide the parts of the audio/video material to a user interface device for presentation to the user, and to store parts of the audio/video material selected by the user. The system can therefore be arranged to record automatically and continuously audio and/or video (a/v) content and to store parts of that content which have been selected by the user from within the predetermined retention period, before being discarded. Since the a/v material is recorded substantially continuously and automatically, there is no requirement for an operator to be required to operate for example a camcorder. As such a facility is provided for recording a spontaneous event, or one which was not anticipated as being of particular interest.

## Description

### Field of Invention

The present invention relates to systems and methods for capturing audio and/or video (audio/video) material.

### Background to the Invention

In recent years, a ready availability of large-capacity digital storage devices and low-cost hardware video encoders has led to a new class of consumer appliance emerging, which is the digital video recorder. Digital video recorders enable a different way of viewing broadcast (terrestrial, satellite, or cable) television. Instead of watching a television program when it is presented, the television program can be automatically recorded for later viewing. A live program may be paused, recorded as it is ending, or rewound and watched again.

The camcorder is a consumer device for obtaining and recording video, integrating both a video camera and a video recorder in a single device. Whilst being popular, it is to some extent inconvenient from a certain point of view, because it requires an operator to active the camcorder to capture a moment on video, which can in certain situations be intrusive. Typically a camcorder is brought into use when a user predicts that an event of interest may occur for which a recording of that event is required. However, typically, events of interest may not occur in a predictable way. Accordingly it would be desirable if a system could be provided which automatically captures audio and/or video content.

### Summary of the Invention

According to the present invention there is provided a system for capturing audio and/or video material from one or more client devices. The system includes a media storage device operable to receive audio/video material from at least one of the client devices and to record the audio/video material continuously and to discard the recorded audio/video material after a predetermined retention period. The system also includes a user interface device and a content analyser. The content analyser is operable to sample the audio/video material within a recording period with respect to one or more parameters of the audio/video material. The content analyser is operable to store for each of the sampled parameter values, a location identifier, which identifies a location of the audio/video material within the recording period at which the sampled parameter value of the audio/video material was generated. The content analyser is operable to retrieve parts of the audio/video material from the media storage device, which have selected sampled parameter values of interest. The content analyser is operable to provide the parts of the audio/video material to a user interface device for presentation to the user, and to store parts of the audio/video material selected by a user.

Embodiments of the present invention provide a system, which automatically records audio and video (a/v) material either continuously or for a predetermined recording period, and discards the recorded a/v material after a predetermined retention period, which may be longer than the recording period. The recording period may be set by a user for example using the user interface device. In one example, the retention period therefore forms a sliding window with respect to real time, retaining a/v material for a time period backward from the current time, for a passage of time up to the retention period into the past. The media storage device may then the a/v material, which is older than the retention period. The a/v material captured during the recording period may be retained for a period, which may be longer than the recording period before being discarded. The recording period, which is typically infinite (continuous recording) is therefore distinct from a retention period for which the recorded a/v material is retained for review and possible archiving by the user.

The user may also select the one or more client devices, from a plurality of client devices, each of which generates a/v material which is to be recorded during the recording period.

Since the a/v material is recorded substantially continuously and automatically, there is no requirement for an operator to activate a client device such as a camcorder. As such a facility is provided for recording for example a spontaneous event, or one which was not anticipated as being of particular interest. As will be appreciated, the predetermined retention period may encompass a substantial amount of a/v material from which parts of interest should be identified in order to retain and/or reproduce those parts. This is because much of the a/v material may contain periods of inactivity, which are of no interest. However, embodiments of the present invention include a content analyser for automatically generating samples of parameters describing the a/v material, which can be used to analyse the a/v material for parts which are of interest to the user. The user interface device allows a user to specify one or more of the predetermined parameters of interest and a range of values of those parameters (for example above a certain value), and to retrieve parts of the audio/video material from the media storage device corresponding to the selected parameter values of interest. The retrieved parts of the audio/video material are then fed to the user interface device for presentation to the user.

In one example, the content analyser includes one or more pre-processors, each of which is operable to generate sampled values of a parameter of the audio/video material within the recording period. Each of the pre-processors is operable to store, for each of the sampled parameter values, a location identifier which identifies a location of the audio/video material within the recording period at which the sampled parameter value of the audio/video material was generated. The user interface device may determine, under user control, one or more filter criteria of interest, which specify one or more of the sampled parameter values and a range of those values with respect to which parts of the audio/video material should be displayed. The content analyser may filter the selected sampled parameter values with respect to the range of the parameter values of interest, to select location identifiers where the sampled parameter values satisfy the range of parameter values of interest. The content analyser may then retrieve the parts of the audio/video material from the media storage device corresponding to the selected parameter values from the selected location identifiers, and provide those parts of the audio/video material to the user interface device for presentation to the user. Therefore, once the a/v material has been recorded or during its recording, the content analyser uses the pre-processors to sample the parameters which describe attributes or characteristics of the a/v material. The content analyser then filters selected sampled parameters values with respect to a range of values specified by the user as being of interest, to the effect of identifying when predetermined criteria associated with each of the filters are satisfied. Location identifiers are selected for a/v material where the filter criteria are satisfied, from which the parts of the a/v material satisfying the selected parameter values of interest can be retrieved from the media storage device. For example, the filtering criteria may be detecting motion within the video content, detecting the presence of a face in the video content or for the example of audio, detecting sounds exceeding a certain level, or recognising individual speakers, within the a/v material.

In one example, radio frequency tags may be applied to items of equipment, which can generate a detectable radio frequency signal which identifies the tag and therefore the item to which it is attached. A detector may therefore be arranged to detect the location of the tag and to generate a parameter value indicating the presence of a tagged item in a particular room. Each of the rooms in a dwelling may therefore include a detector, which may identify that room. As with other parameter values, location identifiers, which identify the a/v material with respect to which a tagged item is detected in a room are generated and stored with the parameter values. Filtering may include selecting parameters corresponding to the detection of a tagged item in one of the rooms in the house.

The location identifiers may be, for example, time stamps providing a temporal reference within the recording period where the parts of the a/v material which satisfy the filtering criteria are located. The location identifiers may be stored separately from the a/v material, which is stored in the media storage device. The user interface device can represent the parts of the a/v material which satisfy the filtering criteria to the user. The user can then select the filter criteria for selecting a/v material of interest, for reproduction or archiving. By recovering the location identifiers corresponding to the filter criteria selected by the user, the parts of the a/v material which are of interest to the user can be presented for review on the graphical user interface device. Accordingly, even if the recording period is relatively long, the user can efficiently and more rapidly retrieve parts of the a/v material, which may be of interest. The automatic capturing of audio-video material is thereby facilitated so that the system can be run continuously in a way, which is more likely to capture spontaneous events, which a user may wish to keep.

In one example the system for capturing a/v material may be deployed in a user's home each of the one or more client devices being cameras with or without microphones which are disposed at locations where it is likely that a user will capture events of interest. Thus the system integrates the features of the digital video recorder and the camcorder into a system designed to record home videos. The system is constantly recording the video obtained by one or more networked cameras, and discarding the recorded video after a predetermined amount of time (the "retention period", typically several days) if a user has not indicated that it should be saved. Thus, unlike a video recorder, which must be turned on before the moment of interest the system is arranged to record continuously and to identify a/v material of interest "after the fact". At any time before the system discards the a/v material, the user may identify and save video segments, which record moments of interest to them. After a predetermined retention period, the a/v material stored in the media storage device is discarded.

Various further aspects of features of the present invention are defined in the appended claims and include a method for capturing audio/visual content, a content analysis processor and a graphical user interface.

### Brief Description of the Drawings

Example embodiments of the present invention will now be described with reference to the accompanying drawings, where like parts are provided with the same reference numerals and in which:
Figure 1 is a schematic block diagram of a house in which a system for continuously and automatically record audio and/or video (a/v) material according to the present invention is disposed;
Figure 2 is a schematic block diagram of part from which the system shown in Figure 1 is comprised;
Figure 3 is a schematic block diagram of the system, which appears in Figure 1 and 2, with a media server of the system shown in more detail;
Figure 4 is a schematic illustration of a part of the operation of a content analyser which forms part of the system shown in Figures 1, 2 and 3;
Figure 5 is an example of information displayed by a user interface device on a display screen of the system;
Figure 6 is a schematic illustration of a part of the operation of the content analyser, which forms part of the system shown in Figures 1, 2 and 3;
Figure 7 is a schematic block diagram illustrating an arrangement in which two filter which each filter sampled parameter values of the a/v material are cascaded;
Figure 8 is a flow diagram illustrating a first part of the operation of the system when recording a/v material; and
Figure 9 is a flow diagram illustrating a second part of the operation of the system when analysing the recorded a/v material.

### Description of Example Embodiments

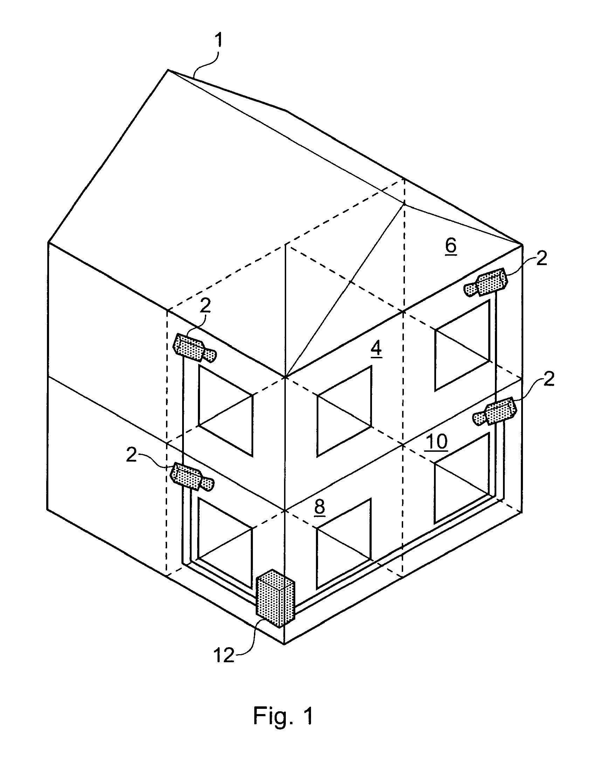

Figure 1 provides an example illustration of a house in which a system for capturing audio/video (a/v) material according to the present technique has been deployed. In Figure 1 the house 1 is shown to include four cameras 2 which are disposed within rooms 4, 8, 6, 10 of the house 1. The cameras 2 are connected to a media server 12 via cables 14. However in other examples, the cameras 2 may be connected to the media server 12 by a variety of means such as a wireless local area network for example operating in accordance with IEEE 802.11B (Wi-Fi). Various types of client devices may be used to capture content of interest. For example the cameras may be web-cams and may include microphones or may only be microphones.

Although the system is illustrated in Figure 1 as being deployed in a house, it will be appreciated that this is but one example application and the system may be deployed in any environment. For example, the system could be deployed in a shopping mall, a car park or a town centre to improve security.

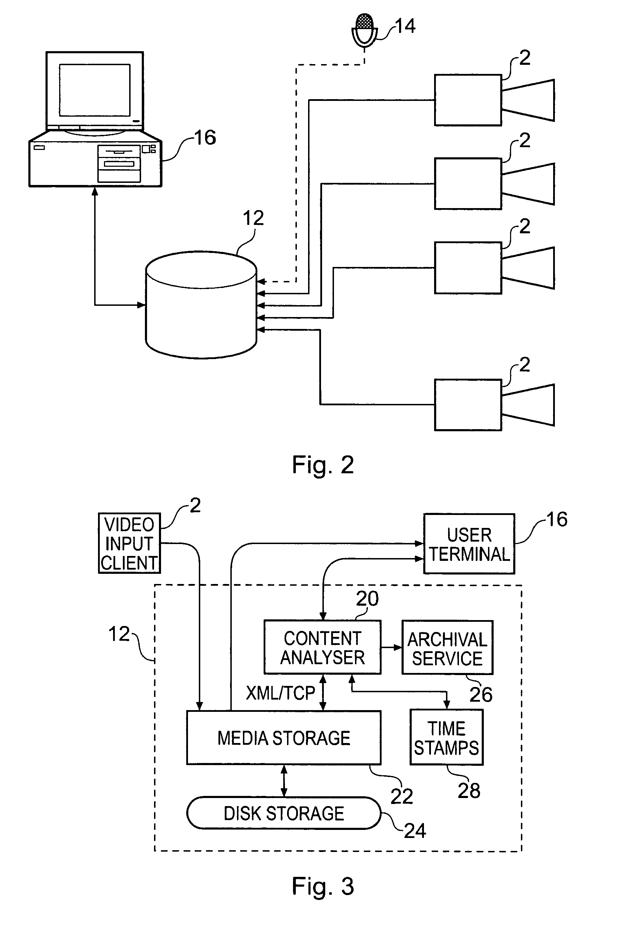

The system shown in Figure 1 is also shown in more detail with respect to the component parts of the system in Figure 2. Although there are four cameras shown in Figures 1 and 2 there may be any number of cameras and may include other devices other than cameras. For example as shown in Figure 2 a microphone 14 has been added which is not shown in Figure 1 but provides an illustration of another type of client device from which a/v material may be generated. Also shown in Figure 2 is a computer terminal 16, which forms a user interface device for accessing the media server 12. As will be explained shortly, the computer terminal 16 provides a user interface device for accessing applications, which are running on the media server 12. The user interface can therefore provide a user with a facility to control both the capture of the a/v material and recording this content for a predetermined retention period and also for displaying parts of that content within the recording period which satisfy predetermined filtering criteria.

The example system illustrated in Figures 1 and 2 provides a facility for recording substantially continuously a/v material from one or more of the client devices 2, 14. When recording video directly from a camera, the video is mostly of an empty room. Even when family members are in a camera's field of view, there are large period of "nothing" (passive entertainment such as reading, watching TV, or using a computer). However, instead, "assisted browsing" is incorporated into the system, which refers to the ability of the system to minimise the effort involved in finding video segments of interest. To this end, the system analyses video in a number of different manners. We refer to the application of each analysis technique as a "filter". A user selects a filter to assist them in browsing. Each filter typically allows the user to set parameters (such as setting a motion threshold, or selecting one or more faces). The recorded video which satisfies the user's parameters is then visually identified. A user may choose to view one of the video segments indicated by the filter, or readjust the filter parameter.

Typical filters include motion detection, audio level detection, face detection, and object recognition. In one example, all of the filters are applied to recorded video once, when it is first captured by the system. The output of the filter is a scalar or (small dimensioned) vector, which is stored in a database along with a timestamp of the video, which was filtered. The parameter varied by the user is then used to search through the stored output of that filter to identify video segments, which may be of interest. In this way, a large amount of video may be searched very quickly.

The client input devices may be networked video cameras, which use a home network both for the output of compressed digital video and control. While the example system would work with any camera capable of generating periodic motion image sequences, such as common "Web-cams", the system in one example includes "standard" resolution video cameras. The system, in one example is capable of storing and manipulating full-resolution, full-frame rate NTSC video, equivalent to that recorded by a camcorder. For example, the system can produce a digital output stream with a bit-rate of two to six megabits per second. Until recently, these networked video clients would have been prohibitively expensive, but the availability of low cost video decoders has reduced their cost to the consumer range.

Ideally, a camera client should act as a standardised Real-Time Streaming Protocol/Real-time Transfer Protocol (RTSP/RTP) server, although other examples can use a more simple video transport protocol. Upon receiving an appropriate command over the network, the server establishes a video transport connection to the requesting host/service on the network and begins streaming encoded video to it. Other commands allow for stopping the video stream or changing the encoding parameters of the video encoding. It is assumed that no significant video buffering occurs in the video input client (although buffering of a second or more may be required by the video encoder.)

The media server 12 which appears in Figures 1 and 2 is shown in more detail in Figure 3. In Figure 3 the media server is shown to include a content analyser 20 as well as a media storage application 22, a disc-storage device 24 and an archiving application 26. As will be explained in more details shortly, generally the media storage application 22 is arranged to record a/v material generated by the client devices 2 in the disc-storage device 24. The a/v material is recorded for a predetermined recording period specified by the user. The media storage device provides a convenient mechanism for applications to record video from a variety of sources, and to later access the recorded video. In addition, it abstracts the Video Input Client, allowing multiple applications to access the video and share any storage of the video. The Content analyser communicates with the media storage device using both an XML/TCP interface for specifying recordings and a Java interface for accessing the recorded video.

In a typical implementation, the components included in the dashed circle are running on a single machine which is left running continuously (such as a home gateway, or home server), while the Video Input Client and user terminal are separate and connected via a home network. The disk storage is a large non-volatile storage device, used by the media storage device to store recently recorded video. The content analyser also uses the disk storage for temporary storage of video clips selected for saving and to preserve computed metrics for recently recorded video, allowing functionality to persist through power outages and system restarts. The storage capacity is arranged to be large enough to store several days of compressed video (times the number of client input devices).

As will be explained shortly, the content analyser informs the media storage device about the desired video: the source (a particular camera) and when it should be recorded. The media storage device 22 allows the recordings to be specified with a fixed time and duration, or a duration ("time out period"), which ends at the current time. This allows an application like the content analyser 20 to specify simply that it always wants to have twenty-four hours of video preceding the current time recorded. The a/v material is therefore recorded for the last twenty-four hours, after which it may be discarded. The period of twenty-four hours is therefore referred to as a timeout period. Although the recorded a/v material is discarded after the timeout period this may be some time after the timeout period.

The media storage device 22 manages the non-volatile storage of continuous streams of compressed video, abstracting the actual storage mechanism from applications and services sharing the video. In one implementation, the storage mechanism is a series of size-limited files stored on disk, with a separate indexing mechanism supporting time-based access to the contents of the files.

One function of the media storage device 22 is allowing multiple applications to share the same video input. For example, the networked cameras used by the system can also be used by other applications around the home, such as: user interface, remote presence, or video telephony. The media storage device 22 allows these applications to share cameras, much in the same way that modem operating systems support the sharing of their input and output peripherals. Not only can they share the video currently being recorded by the device, they can also share a common record (storage buffer) of the video.

After the desired video has been recorded, the content analyser 20 requests a particular time segment of video, identified by the source and location identifiers which provide absolute timestamps of the head and tail of the desired segment. The media storage device 22 responds by providing a buffer containing as much of the requested segment as possible. The requested size may be altered either due to lack of stored video, or to prevent the returned data buffer from exceeding a predetermined amount of storage.

After a predetermined timeout period (seventy-two hours for example), video segments recorded by the media storage device 22 may be automatically deleted. If a longer term storage of the video is required, the relevant segment can be obtained from the media storage device and independently stored. An application is, however, allowed to extend the timeout period indefinitely through periodic requests that it be renewed. This would be used in the case where the maximum timeout period was less than the Content analyser's "retention period".

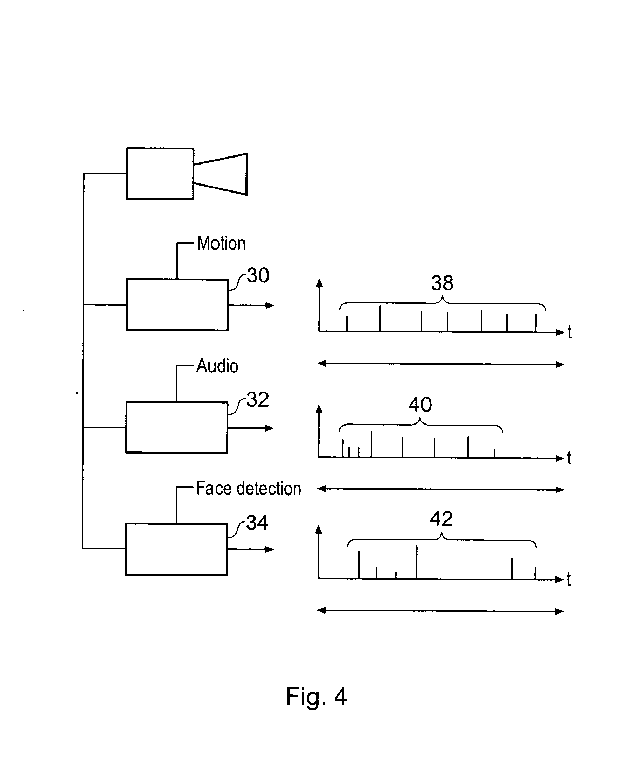

The content analyser 20 includes a plurality of pre-processors each of which is arranged to generate a sample of a predetermined parameter describing the a/v material. For each of the sampled parameter values a corresponding location identifier is generated (time stamp) identifying a location in the recorded a/v material corresponding to location of that sampled parameter value. The sampled parameter values and the corresponding location identifiers are stored in a data store 28. In other examples the location identifiers may be stored in the disc-storage device 24. The location identifiers may be, for example, time stamps providing a temporal reference of the parts of the a/v material, which satisfy the filtering criteria within the predetermined recording period. A further explanation of the generation of the location identifiers (time stamps) is provided in the following paragraphs with reference to Figure 4.

In Figure 4, one of the video camera 2 is shown connected to three example pre-processors 30, 32, 34, which form part of the content analyser 20. Each of the pre-processors is arranged to analyse the video signals and the audio signals generated by the video camera, with respect to a predetermined parameter. For example the first pre-processor 30 is operable to detect motion within the video signals generated by the video camera 2. The video signals are analysed and when motion is detected (by for example a change in the luminance component) a sample is generated providing a relative measure of that motion. In addition, with that relative motion sampled value, a time within the recording period is identified, which forms a location identifier for the detected relative motion sample of the a/v material within the recording period 36. Thus within the recording period 36 a series of samples 38 are generated providing relative motion samples with respect a time at which these occur within the recording period (location identifiers). Likewise, the two other pre-processors 32, 34 also generate sampled parameter values 40, 42 within the recording period 36. The second of the three pre-processors 32 generates the overall, short time (seconds) averaged audio energy level. A third of the three pre-processors 34 generates samples, which indicate the presence of a face within the video signals. The sampled parameter values are stored within the data store 26.

The content analyser 20 serves as a mediator between a user looking for interesting video, and the media storage device 22, which stores all recently recorded video. It is the content analyser 20, which analyses the video and helps the user search through retained video to find video clips for saving and sharing. A large portion of the functionality of the Content analyser is described later in the user interface.

As will be explained shortly, the content analyser 20 also has the responsibility of identifying which cameras are used and requesting the recording from the media storage device. It queries the media storage device for a list of available cameras, and presents these to the user in the set-up mode of the user interface. Once a user indicates which cameras in the home they want the system to use, the media storage device 22 is notified to begin recording from those cameras.

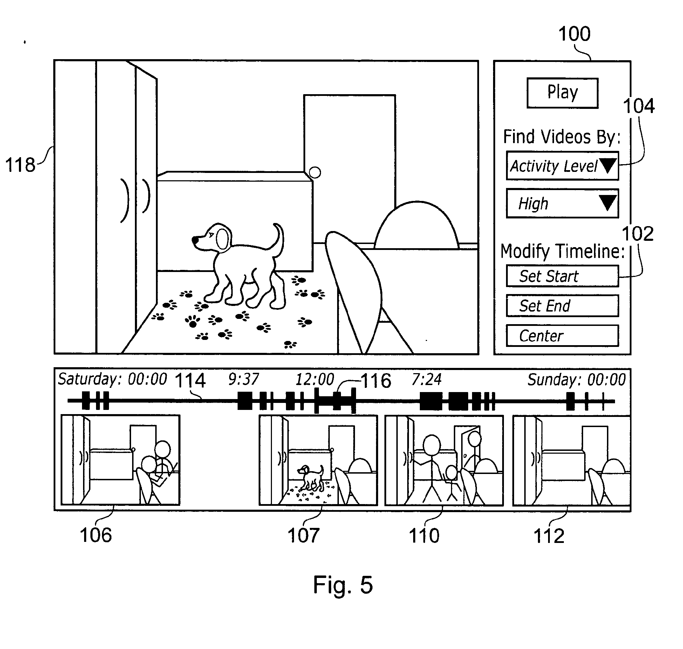

When a user wishes to review the a/v material within the retention period the user controls the user terminal 16 to recover parts of the a/v material corresponding to selected filter criteria. The user terminal 16 is provided with a user interface, an example of which is shown in Figure 5. Within the graphical user interface a control panel 100 is provided for allowing the user to select both the client devices which are used to capture the a/v material. Also within the control panel 100 is a parameter filter controller 104 which for the present example selects a/v material with the motion above a certain percentage. Thus, using the control panel 100 a user selects the filter criteria of interest. The user interface device then communicates the selected filter criteria to the content analyser, which retrieves location identifiers corresponding to those filter criteria. The content analyser 20 then operates in combination with the user interface device to display video images represented by those time stamps 106, 108, 110, 112 along a timeline 114. As shown the timeline 114 also includes a bar indicating the length of the a/v material for which the filter criteria are satisfied. The user may then select one of the bars 116 for displaying the video content as illustrated within the main window 118.

If the duration of the a/v material for which a filter criteria is satisfied is less than a predetermined duration then the content analyser ignores this a/v material. Similarly if there is a pause between two samples of a/v material which satisfy predetermined filter criteria of less than a certain continuity period then these samples of a/v material are arranged to form a continuous passage providing all the a/v material from both the samples and the intervening period for which the filter criteria were not satisfied.

In addition to selecting the samples of a/v material from the retention period for display to the user, the user interface device shown in Figure 5 can also be used to select the client devices from which a/v material is to be selected. Furthermore, once a/v material has been previewed by the user as satisfying certain filter criteria of interest then this a/v material can be archived. The user interface device therefore communicates with the content analyser to retrieve the a/v material of interest form the disc-storage device via the media storage application 22 and this is archived within the archiving application 26. The user interface provides a facility for selecting segments of a/v material, which are identified as satisfying certain filter criteria. Buttons 102 are provided to adjust the end points of the a/v material being saved.

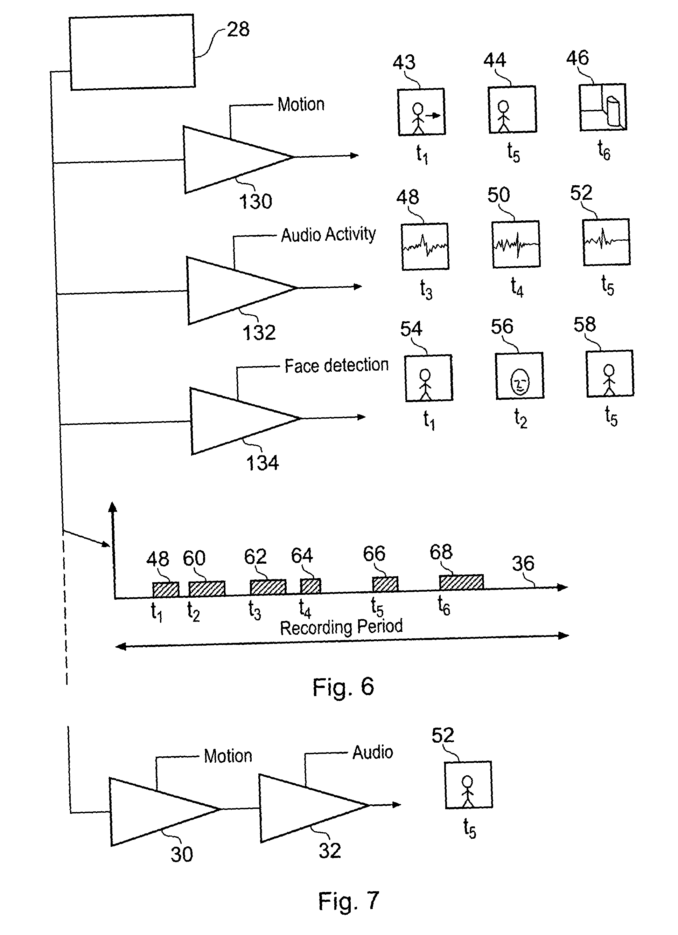

Figure 6 provides an example of an arrangement in which the time stamps, which form location identifiers which were generated by the pre-processors 30, 32, 34, are filtered to identify parts or periods in the a/v material which satisfy certain user specified criteria. These criteria are referred to as filter criteria. Examples of filter criteria, which correspond to the parameters generated by the pre-processors 30, 32, 34 include motion-detection, audio signals and face recognition. For example the relative motion detection values generated by the pre-processor 30 are filtered to identify certain parameter values within or above a certain relative measure. The audio signals may detect audio activity, which is a time-averaged audio energy being captured by a camera or a microphone. The face detection may process the sampled values to select those time stamps (location identifiers) which have detected the presence of one or more faces within the video images. Other examples include significant changes within the video content with respect to the chromatic content, and/or luminance changes.

As mentioned above, in another example, signals representing the detection of a tagged item may be generated, when the presence of a tagged item in a room is detected. The item may be tagged with a radio frequency transmitter, although tags generating other types of signals are also possible. The signals may be filtered for example with respect to a particular room or rooms, which are of interest to the user.

As can be seen in Figure 6, the content analyser 22 is arranged to feed each of the respective sampled parameter values from the data store 28 to a corresponding filter, for filtering those values. As shown, three filters 130, 132, 134, filter respective sampled parameter values to identify those samples which fall within a range or have values of interest to the user. For example, the first of the three filters 30 may be arranged to detect relative motion within the a/v material, above a certain relative value. The second of the three filters 32 processes the audio signal and detects parts of the a/v material where the audio signal exceeds a user specified value. A third of the three filters 34 may be arranged to identify the presence of a face within the video images of the a/v material. For each of the three filters, where the a/v material satisfies the filtering criteria provided by each of the filters, a corresponding time stamp for these sampled parameter values is selected to identify the location of the a/v material within the recording period where the filter criteria are satisfied. As shown in Figure 6, the recording period is represented graphically as a timeline 36 going from left to right across the page. As can be seen in Figure 6 for each of the time stamps selected by the three filters, a corresponding location within the recording period of the a/v material is shown on the timeline 36. The time stamps are shown schematically at the output of each of the three filters so that, for example, for the first filter detecting motion, three time stamps t1, t5, t6 are shown with respect to representative images giving examples of motion. So for the example of the first two of the time stamps 43, 44 the motion filter detects motion of a person within the video images. For a third image 46 a time stamp t6 is generated when a door is opened within the room as represented by the video images 46. Correspondingly, a temporal duration with respect to which the filter criteria are satisfied within the recorded a/v material is represented by bars along the timeline 36. So, for example, for the time stamp t1 a bar 48 is shown to represent the duration for which the motion filter criteria is satisfied within the a/v material. Correspondingly for the other example filtering criteria, the time stamps corresponding to the detected filter criteria are represented in a graphical form by the pictorial blocks 48, 50, 52, 54, 56, 58. The passages or parts of the a/v material within the retention period 40 are correspondingly represented for each of the time stamps t2, t3, t4, t5, t6 by the bars 60, 62, 64, 66, 68. Thus the bars 60, 62, 64, 66, 68 represent passages or segments within the a/v material where these filter criteria are satisfied.

The content filters in one example may be cascaded by the content analysis processor to the effect that the time stamps (location identifiers) generated by one content filter are filtered by another content filter thereby identifying only location identifiers meeting the criteria of both filters. One example is shown in Figure 7 for the motion filter 30 and the audio filter 32. As before the time stamps are filtered by the motion filter 30. However, the output of the motion filter is also then filtered by the audio filter 32. Effectively, therefore the output of the motion filter is correlated with the output of the audio filter 32 to identify segments of the a/v material providing both motion and audio signals according to the user selected criteria set for each of those filters individually. Accordingly for the present example only the time stamp t5 is identified corresponding to the a/v material period 52.

In another example, a filter that tries to identify people might take as input the output of a face identification filter, an object tracking filter, and a voice identification filter (each of which may be used independently). The resulting metrics for each second of video (thirty frames) are stored in a database and used by the content analyser 20 for interactively segmenting the video.

When a user submits a request for video segments that meet certain filter criteria (using the User Interface), the system simply searches through the database for those seconds of recorded video, which meet the search criteria. These frames are then merged into video clips. As indicated above, if the duration of a selected segment of video, which satisfy the filter criteria is less than the predetermined minimum duration time, such as for example five seconds, then, it will be ignored. If there is a gap between two video clips meeting the filter criteria of less than a continuity period of for example five seconds, then they are merged into a single video clip. The resulting clips are displayed using a timeline format for the user to browse.

In the example system, the user interface provided by the computer terminal 16 supports all user configuration and interaction with the system. In one example the user interface is HTML based, making it accessible from any terminal in the home supporting a web browser. The interface is modal, with two screens: browse and set-up. Each screen has buttons for changing to the other mode.

Upon start-up, the user interface is in browse mode as for example illustrated by Figure 5. A user is presented with large screen for viewing video clips, some filtering controls on the right, and a timeline along the bottom. A user selects a camera and a filter, then sets the filtering parameter (amount of motion, amount of sound, which face, which voice, which person, etc.). The system calculates and presents a timeline of all video it has recorded for that camera, with video segments which satisfied the specified search highlighted. Thumbnails (proxy video) of some of the video segments are also displayed. A user may zoom in, out, or move along this timeline.

If a user is interested in a particular video segment, they select it by clicking on its location in the timeline (or the thumbnail). The video clip is then played in the large window in the middle of the interface, using standard controls (pause, play, rewind, fast forward, and stop). Crucial to the interface is the ability to adjust the endpoints of the suggested video segment. This is done by entering a "set start" or "set stop" mode, and clicking on the timeline to indicate the new start or endpoint of the segment, using the buttons 102 shown in Figure 5.

Once a user chooses a video segment, and has adjusted the endpoints if necessary, they may indicate to the system that it should be moved into a home's collection of video clips simply by indicating a filename and pressing the "KeepIt" button.

The set-up mode provides controls needed to configure the system. It allows users to view, which cameras are available in their home for recording, and to select which ones are actually used. Cameras that are enabled also show their status, and provide a means for live viewing. Pressing a button causes a new window to be created, showing live video from the selected camera. This live view is used for interactively adjusting the camera positioning and focus.

### Summary of Operation

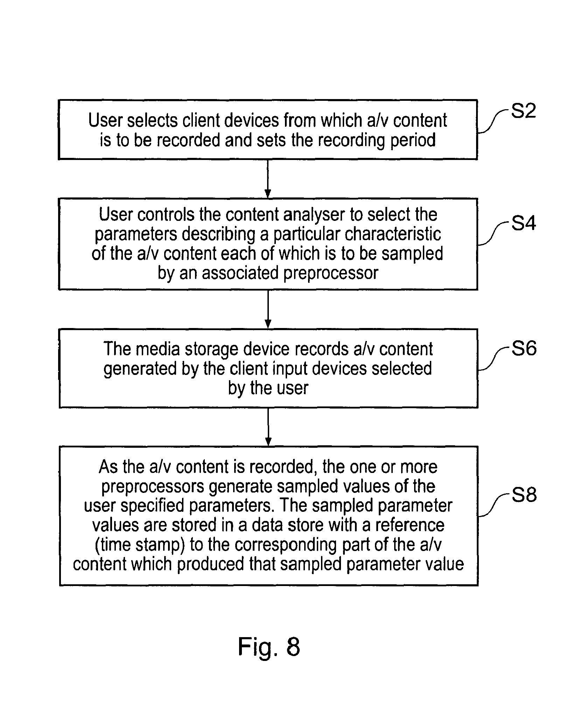

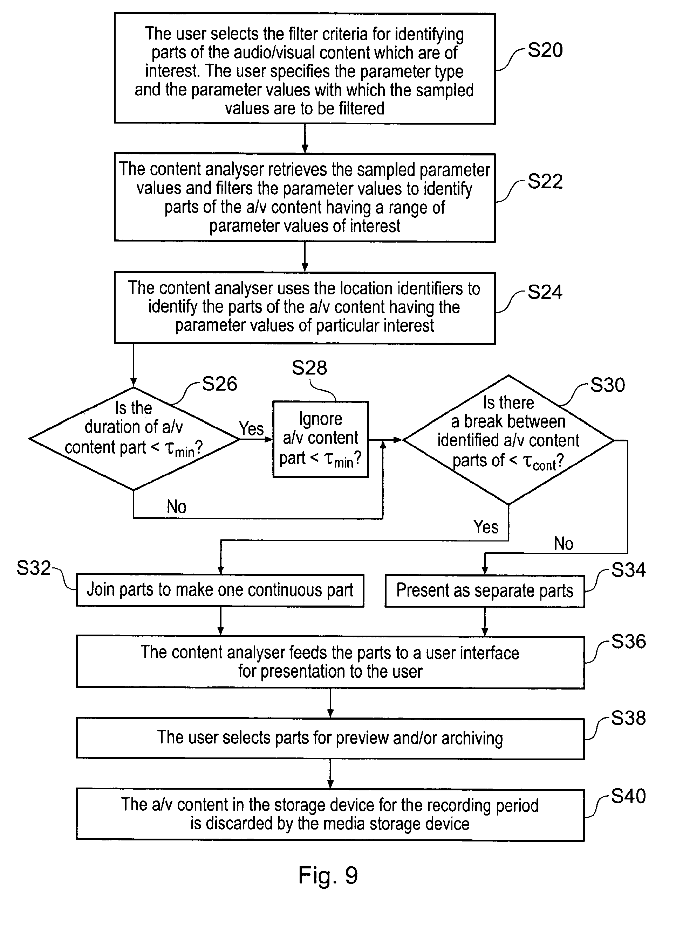

Figures 8 and 9 provide flow diagrams summarising a process of recording audio/video material according to the present technique. A first part of the process is associated with setting the conditions for recording the audio/video material in order that the recorded content can be navigated for presentation to the user with respect to parameters which are of interest to the user. The first part of the process which is represented by the flow diagram in Figure 8 is summarised as follows:
S2: The user controls the graphical user interface device to specify the client devices from which a/v material is to be recorded and sets the recording period for which that a/v material is to be continuously recorded by the media storage device in a disc-storage unit.
S4: The user then controls the content analyser to select parameters of the a/v material describing particular characteristics of the a/v material, which are of interest to the user. As a default all the parameters of the a/v material are selected. The content analyser is responsive to the user control to assign a pre-processor to each of the parameters of interest, the pre-processors being arranged to sample the corresponding parameter of the a/v material.
S6: The media storage device then records the a/v material from the client devices selected by the user in the storage device.
S8: During or after the recording of the a/v material, the a/v material is sampled by the pre-processors, which generate sampled values of the user specified parameters. The sampled parameter values are stored in a data store with a reference (time stamp) to the corresponding part of the a/v material, which produced that sampled value. The references to the corresponding parts of the a/v material provides location identifiers which may be, for example, time stamps providing temporal references within the recording period where parts of the a/v material satisfy the predetermined criteria.

Once the a/v material has been recorded in the disc storage unit and the location identifiers have been recorded in the content analyser's data store 28, a user may browse a/v material which satisfies filter criteria which are established, in a second part of the process, to identify a/v material of interest. The second part of the process is represented by the flow diagram Figure 9, which is summarised as follows:
S20: The user controls the graphical user interface to select filter criteria for identifying parts of the audio/video material which are of interest to the user. The user then specifies the parameter type and the parameter values with which the sampled values are to be filtered.
S22: The content analyser then retrieves the sampled parameter values and filters the parameter values to identify parts of the a/v material having a range of those parameter values which are of interest to the user.
S24: Location identifiers corresponding to the sampled parameter values which are within the range of values of interest to the user are selected and the corresponding parts of the a/v material at these location identifiers are retrieved from the storage device.
S26: The duration of each of the selected parts of the a/v material are compared to a minimum duration value *τₘᵢₙ.*
S28: If the part of the a/v material is less than the minimum duration *τₘᵢₙ,* then that part of the a/v material is ignored, and processing continues from step S30.
S30: A break between successive parts of the a/v material is then compared with a continuity period *τ_{cont}.*
S32: If a break between two successive a/v material parts is less than the continuity period, then the two successive parts of the a/v material are joined as a continuous part.
S34: If however there is a break between two successive parts of the a/v material greater than the continuity period *τ_{cont},* then the parts are presented to the user separately.
S36: The content analyser feeds the parts of the a/v material to a user interface for presentation to the user.
S38: The user can then select the parts of the a/v material for preview or archiving.
S40: After the retention period, the storage device discards the a/v material, which has been recorded in the storage unit. The recorded a/v material may be retained for a period which is longer than the recording period, to allow a user an opportunity to review the a/v material recorded during the recording period to select sections of a/v material of interest. However, after a predetermined retention period the a/v material may be discarded. Alternatively, the a/v material may be discarded for all a/v material, which is older than the retention period. As such the a/v material may be continuously recorded into a buffer which forms a sliding window with respect to current time, with any a/v material which is older than the retention period being overwritten.

Various modifications may be made to the embodiments as herein before described without departing from the scope of the present invention. For example, although the present invention has been illustrated with the content analyser and the media storage application operating on the same media storage server, in other embodiments these could form separate data processing units. Similarly, although for example the audio/video material generating system has been deployed within a home, the system could be deployed in any other environment such as a shopping mall or a town centre, for example to aid security. Furthermore, although cameras have been provided as an example of client devices, other examples could be used such as motion detectors and sound detectors, and the presence of electronic devices which have been tagged to be monitored by the system.

## Claims

1. A system for capturing audio/video material from one or more client devices, the system comprising
a media storage device operable
to receive audio/video material from at least one of the client devices,
to record the audio/video material continuously, and
to discard the recorded audio/video material after a retention period, and
a content analyser operable
to sample the audio/video material within a recording period with respect to one or more parameters of the audio/video material,
to store, for each of the sampled parameter values, a location identifier which identifies a location of the audio/video material within the recording period at which the sampled parameter value of the audio/video material was generated, to retrieve parts of the audio/video material from the media storage device which have selected sampled parameter values of interest,
to provide the parts of the audio/video material to a user interface device for presentation to the user, and
to store parts of the audio/video material selected by a user.

2. A system as claimed in Claim 1, wherein the content analyser includes one or more pre-processors, each of which is operable
to generate the sampled values of the one or more parameters of the audio/video material within the recording period, and
to store, for each of the sampled parameter values, the location identifier which identifies a location of the audio/video material within the recording period at which the sampled parameter value was generated, and
the user interface device is operable to determine, under user control, one or more filter criteria specifying one or more of the sampled parameter values with respect to which parts of the audio/video material should be displayed and a range of those parameter values of interest, the content analyser being operable
to filter the selected sampled parameter values with respect to the range of the parameter values of interest,
to select location identifiers where the sampled parameter values satisfy the range of parameter values of interest, and
to retrieve the parts of the audio/video material from the media storage device corresponding to the selected parameter values with the range of parameter values of interest from the selected location identifiers, and
to provide the retrieved parts of the audio/video material to the user interface device for presentation to the user.

3. A system as claimed in Claim 1 or 2, wherein the content analyser is operable to ignore the parts of the audio/video material, where the location identifiers identified by user specified filtering criteria identify a period of the audio/video material which is less than a predetermined minimum duration, the ignored parts of the audio/video material not being provided to the user interface device for presentation to the user interface.

4. A system as claimed in Claim 1, 2 or 3, wherein the content analyser is operable to combine a plurality of parts of the audio/video material which are separated by less than a predetermined minimum period where the filter criteria are not satisfied.

5. A system as claimed in any preceding Claim, wherein the user interface device is operable in response to a user command to store one or more the parts of the audio/video material which are presented to the user as satisfying the filter criteria.

6. A system as claimed in any preceding Claim, wherein the content analyser includes a plurality of the content filters, each of which is associated with one of the pre-processors which generate the sampled parameter values, and the parts of the audio/video material are selected in accordance with the user specified filter criteria by selecting the range of values of interest for one or more of the pre-determined parameters, the content analyser being operable to arrange for one or more of the contents filters to receive the sample parameter values for the one or more of the pre-determined parameters of interest, and the specified range of parameters values, each of the one more filters being operable to select the location identifiers which correspond to the audio/video material within the recording period which have the specified range of parameter values.

7. A system as claimed in Claim 6, wherein the content analyser in response to a user selection is arranged to cascade one or more of the content filters to the effect that location identifiers are selected which satisfy the selected parameter value ranges for more than one of the pre-determined parameters.

8. A system as claimed in any preceding Claim, wherein the content analyser is operable to represent the one or more client devices available to the user for recording the audio/video material within the recording period, and to provide an arrangement for selecting the one or more client devices from which the audio/video material is to be recorded and the recording period for which the audio/video material should be recorded and analysed with respect to the one or more parameters of the audio/video material.

9. A system as clamed in any preceding Claim, wherein the media storage device is provided with an interface for allowing access to the recorded audio/video material to other application programs.

10. A content analyser operable to receive audio/video material and to analyse the audio/video material within a recording period, the audio/video material being stored in a media storage device and discarded after a predetermined retention period, the content analyser comprising
one or more pre-processors, each of which is operable
to generate sampled values of one or more parameters of the audio/video material within the recording period, and
to store, for each of the sampled parameter values, a location identifier which identifies a location of the audio/video material within the recording period at which the sampled parameter value of the audio/video material was generated, the content analyser being operable
to filter the sampled parameter values with respect to a user selected range of the parameter values of interest,
to identify location identifiers where the sampled parameter values satisfy the range of parameter values of interest, and
to retrieve the parts of the audio/video material from the media storage device corresponding to the selected parameter values with the range of parameter values of interest from the identified location identifiers, and
to provide the retrieved parts of the audio/video material to a user interface device for presentation to the user.

11. A method for capturing audio/video material from one or more client devices, the method comprising
receiving audio/video material from at least one of the client devices,
recording the audio/video material continuously,
discarding the recorded audio/video material after a predetermined retention
period,sampling the audio/video material within a recording period with respect to one or more parameters of the audio/video material,
retrieving parts of the audio/video material from the media storage device which have selected sampled parameter values of interest,
providing the parts of the audio/video material to a user interface device for presentation to the user, and
storing parts of the audio/video material selected by the user.

12. A computer program having computer executable instructions, which when loaded on to a data processor causes the data processor to perform the method according to Claim 11.

13. A computer program product having a computer readable medium having recorded thereon information signals representative of the computer program claimed in Claim 12.

14. A signal representing the computer program as claimed in Claim 12.
